# EUROPÄISCHE PATENTSCHRIFT

(11) **EP 0 984 837 B1**
(45) Veröffentlichungstag und Bekanntmachung des Hinweises auf die Patenterteilung: **28.02.2001**
(21) Anmeldenummer: 98928230.6
(22) Anmeldetag: 07.05.1998
(51) Int. Cl.: B22D 21/00, B21K 1/38

(54) **VERFAHREN UND VORRICHTUNG ZUR HERSTELLUNG EINES EINTEILIGEN FAHRZEUGRADES**
METHOD AND DEVICE FOR PRODUCING A ONE-PIECE VEHICLE WHEEL
PROCEDE ET DISPOSITIF DE PRODUCTION D'UNE ROUE DE VEHICULE D'UNE SEULE PIECE

(30) Priorität: 26.05.1997 DE 19721962; 26.02.1998 DE 19808106
(43) Veröffentlichungstag der Anmeldung: 15.03.2000
(73) Patentinhaber: Leico GmbH & Co. Werkzeugmaschinenbau, 59229 Ahlen, Westf. (DE)
(72) Erfinder: POLLKÖTTER, Günter, D-59269 Beckum (DE)
(74) Vertreter: Wunderlich, Rainer, Dipl.-Ing.
(86) Internationale Anmeldenummer: EP9802688
(87) Internationale Veröffentlichungsnummer: WO9853937

(56) Entgegenhaltungen:
- DE-A- 1 908 465
- DE-A- 3 801 104
- DE-B- 1 297 570
- PATENT ABSTRACTS OF JAPAN vol. 007, no. 056 (C-155), 8. März 1983 & JP 57 207162 A (NIHON KEIKINZOKU KK), 18. Dezember 1982

## Beschreibung

Die Erfindung betrifft eine Vorrichtung und Verfahren zur Herstellung eines einteiligen Fahrzeugrades mit einer Nabe und einer Felge.

Zur Herstellung von Fahrzeugrädern ist bekannt, diese durch Gießen herzustellen. Gegenüber einem reinen Gußwerkstück kann eine höhere Festigkeit erreicht werden, indem ein Rohling in einer Gesenkschmiede geformt und anschließend auf einer Drückwalzmaschine weiter bearbeitet wird. Derartige bekannte Verfahren sind aufwendig hinsichtlich der notwendigen Werkzeuge.

Der Erfindung liegt die **Aufgabe** zugrunde, Verfahren und eine Vorrichtung anzugeben, mit welchem Fahrzeugräder mit hoher Festigkeit einfach hergestellt werden können.

Die Aufgabe wird nach der Erfindung durch ein Verfahren mit den Merkmalen des Anspruchs 1 gelöst. Erfindungsgemäß ist ein Verfahren zur Herstellung eines einteiligen Fahrzeugrades mit einer Nabe und einer Felge vorgesehen, bei dem:
a) eine hinterschneidungsfreie, im wesentlichen scheibenförmige Vorform gegossen wird,
b) unmittelbar nach dem Gießen die Vorform unter Beibehaltung einer Restwärme zu einer Drückwalzmaschine transportiert und in dieser eingespannt wird,
c) die eingespannte Vorform in ihrem Umfangsbereich gespalten und durch anschließendes Drücken und Drückwalzen zu einer Zwischenform mit einem Felgenbettbereich geformt wird, welcher bereits weitgehend die Wanddicke der Felge des fertigen Fahrzeugrades aufweist,
d) die Zwischenform abgekühlt wird, und
e) die abgekühlte Zwischenform kalibriert und zu dem fertigen Fahrzeugrad endbearbeitet wird.

Die Gestaltung der Vorform als im wesentlichen scheibenförmiges, hinterschneidungsfreies Werkstück ermöglicht die Verwendung eines einfach aufgebauten Gußwerkzeuges. Statt eines üblicherweise notwendigen mehrteiligen Segmentwerkzeuges kann ein einfaches, zweiteiliges Gußwerkzeug zur Anwendung kommen. Dabei entfällt zudem das aufwendige Entfernen von Gießnähten, die bei mehrteiligen Werkzeugen unvermeidbar sind. Der Mittenbereich der gegossenen Vorform entspricht im wesentlichen der Nabe des fertigen Fahrzeugrades.

Eine Vereinfachung des Fertigungsprozesses bei einer wesentlichen Energieeinsparung ergibt sich durch den unmittelbaren Transport der gegossenen Vorform zum nächsten Bearbeitungsschritt an einer Drückwalzmaschine. Nach dem Gießen hat die Vorform eine Temperatur von ca. 300°C. Inbesondere bei der Verwendung von Leichtmetallen ist zur Vermeidung von Rissen ein Drückwalzen bei einer erhöhten Temperatur vorteilhaft, welche bevorzugterweise oberhalb der Rekristallisationstemperatur des Werkstoffes liegt. Beim Drückwalzen einer erwärmten Vorform sind deutlich geringere Umformkräfte aufzuwenden als bei Werkstücken mit Raumtemperatur.

Gegenüber den bisher üblichen Verfahren, bei denen die Felgenkontur und die Wandenddicke mit einem gewissen Zuschlag für eine abschließende mechanische Bearbeitung versehen werden, sind bei dem erfindungsgemäßen Verfahren nach dem Kalibrieren das Felgenbett und die seitlichen Felgenhörner weitestgehend endgeformt. Für die Seitenbereiche und das Einbringen von Bohrungen bedarf es noch einer gewissen spanabhebenden Bearbeitung.

Das erfindungsgemäße Verfahren ist in vorteilhafter Weise dadurch weitergebildet, daß der Vorform nach dem Gießen und vor dem Umformen zu der Zwischenform zusätzlich Wärme zugeführt wird. Beispielsweise wird die Vorform auf ca. 400°C in einem Ofen erwärmt, welchen die Vorform beim Transport von der Gießvorrichtung zur Drückwalzmaschine durchläuft. In diesem Ofen ist lediglich eine Erwärmung von der Temperatur nach dem Gießen auf die gewünschte Bearbeitungstemperatur beim Drückwalzen notwendig. Gegenüber einer Erwärmung ausgehend von einer Raumtemperatur ergeben sich so kürzere Aufwärmzeiten und eine verbesserte Energiebilanz.

Eine weitere Variante der Erfindung besteht darin, daß das Fahrzeugrad aus einer nicht aushärtbaren Aluminiumlegierung, insbesondere Gk-Al Si 11 Mg gefertigt wird. Die Zwischenform bedarf dabei keiner zusätzlichen Wärmebehandlung und kann direkt nach dem Abkühlen kalibriert werden. Das Abkühlen kann in einer tunnelförmigen Abkühlvorrichtung erfolgen, welche die Zwischenform beim Transport zu der Kalibriervorrichtung durchläuft.

Eine alternative Ausführungsform besteht darin, daß das Fahrzeugrad aus einer warm aushärtbaren Aluminiumlegierung, insbesondere Gk - Al Si 7 Mg Wa, gefertigt wird. Derartige Aluminiumlegierungen sind gut spanlos umformbar. Zur Erreichung einer gewünschten Festigkeit ist im Anschluß an die Formung der Zwischenform eine Wärmebehandlung notwendig.

Bevorzugterweise besteht die Wärmebehandlung darin, daß die Zwischenform einem Lösungsglühen und einer Abschreckkühlung unterzogen wird. Die Temperaturführung und Dauer des Lösungsglühens sowie die Geschwindigkeit beim Abschreckglühen hängen vom jeweils verwendeten Werkstoff ab. Die Abkühlung erfolgt üblicherweise auf Raumtemperatur.

Eine weitere Variante des erfindungsgemäßen Verfahrens besteht darin, daß das Kalibrieren der Felge mittels einer Profilrolle auf einer Drückwalzmaschine durchgeführt wird und daß die Felge lediglich in ihren Seitenbereichen an den Felgenhörnern mechanisch endbearbeitet wird. Die Profilrolle weist eine Kontur auf, welche die Negativform der gewünschten Kontur des Felgenbettes und der Felgenhörner ist. So kann der Kalibriervorgang durch einfaches radiales Zustellen einer Profilrolle erfolgen.

Die Aufgabe wird weiterhin nach der Erfindung durch ein Verfahren mit den Merkmalen des Anspruchs 7 gelöst. Eine im wesentlichen scheibenförmige Vorform wird in ihrem Umfangsbereich ein erstes Mal gespalten. Durch anschließendes Drücken und Drückwalzen wird eine Zwischenform mit einem radialen Flansch und einem Felgenbettbereich geformt, welcher bereits weitgehend die Wanddicke der Felge des fertigen Werkzeugrades aufweist. Anschließend wird der radiale Flansch ein zweites Mal gespalten in einen zum Felgenbett gerichteten Innenschenkel und einen Außenschenkel. Aus dem Außenschenkel wird schließlich ein Felgenhorn und aus dem Innenschenkel eine etwa axial gerichtete Felgenschulter geformt, wobei zwischen dem Felgenbettbereich und der Felgenschulter ein Hinterschnitt gebildet wird.

In einer bevorzugten Verfahrensvariante werden das Felgenhorn aus dem Außenschenkel und die Felgenschulter aus dem Innenschenkel durch Drücken und Drückwalzen geformt.

Eine vorteilhafte Verfahrensvariante besteht darin, daß an der Felgenschulter ein Hump angeformt wird.

Weiter ist nach der Erfindung eine Vorrichtung nach dem Anspruch 10 zur Lösung der Aufgabe vorgesehen. Die hinterschneidungsfreien Gußteile erlauben ein einfaches und problemloses Herstellen der Vorformen. Während komplizierte Gußteile zunächst einem Gußputz unterzogen werden müssen, können bei der Erfindung die einfachen Teile direkt einem Drückerwalzprozeß zugeführt werden. Während des Transports wird durch gezieltes Kühlen oder zusätzliches Erwärmen der noch aufgeheizten Gußteile eine gewünschte Drückwalztemperatur eingestellt.

Die Erfindung wird weiter anhand von bevorzugten Ausführungsbeispielen erläutert, welche schematisch in den Zeichnungen dargestellt sind.

In den Zeichnungen zeigen:
- Fig. 1: eine Teilquerschnittsansicht einer Vorform;
- Fig. 2: eine Teilquerschnittsansicht einer Zwischenform;
- Fig. 3: eine Teilquerschnittsansicht der Zwischenform nach dem Kalibrieren;
- Fig. 4: eine Draufsicht auf eine Vorrichtung nach der Erfindung zur Durchführung des erfindungsgemäßen Verfahrens;
- Fig. 5: eine Teilquerschnittsansicht einer weiteren Vorform zur Durchführung einer Verfahrensvariante;
- Fig. 6: eine Teilquerschnittsansicht einer Zwischenform nach dem ersten Spalten;
- Fig. 7: eine Teilquerschnittsansicht einer Zwischenform bei einer Umformung zur Ausbildung des Felgenbettes;
- Fig. 8: eine Teilquerschnittsansicht einer Zwischenform nach dem zweiten Spalten und einer Umformung zur Ausbildung des Felgenbettes mit innenseitigem Felgenhorn;
- Fig. 9: eine Teilquerschnittsansicht einer Zwischenform nach einem Umformprozeß zur Ausbildung eines Hinterschnittes und eines außenseitigen Felgenhorns und
- Fig. 10: eine Teilquerschnittsansicht eines erfindungsgemäß hergestellten Fahrzeugrades mit einer fertig ausgeformten Felge mit Hinterschnitt.

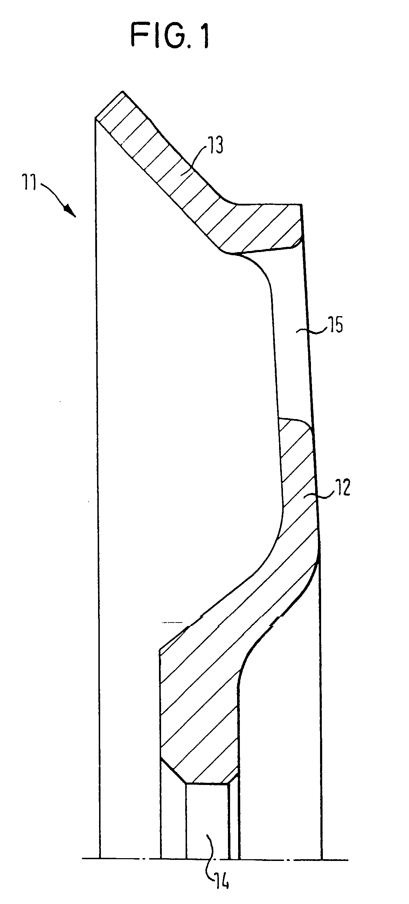

In Figur 1 ist eine gegossene, im wesentlichen scheibenförmige Vorform 11 dargestellt, welche einen Nabenbereich 12 und einen schräg ausgebildeten Umfangsbereich 13 aufweist. Im Nabenbereich 12 sind eine Mittenöffnung 14 sowie weitere Durchbrüche 15 angeordnet. Der Nabenbereich 12 wird beim Gießen so ausgeformt, daß er bis auf eine geringfügige spanabhebende Bearbeitung im Bereich der Mittenöffnung 14 einer Nabe des fertigen Fahrzeugrades entspricht.

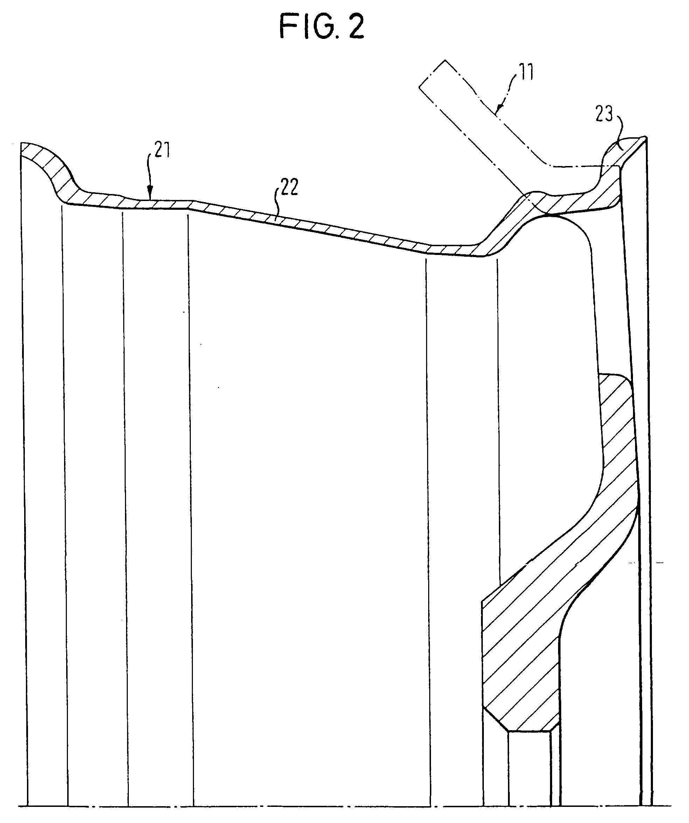

Die Vorform 11 wird unmittelbar nach dem Entnehmen aus einer Gußform zu einer Drückwalzmaschine transportert, in welcher die in Figur 2 gestrichelt dargestellte Vorform 11 zu einer Zwischenform 21 spanlos umgeformt wird. Hierzu wird die Vorform 11 in ein Drückfutter mit entsprechender Außenkontur eingespannt. Anschließend wird die Vorform 11 in ihrem Umfangsbereich 13 gespalten, so daß ein größerer Teil des Umfangsbereichs 13 zu einer Seite zu einem Felgenbettbereich 22 und ein kleinerer Teil zu der anderen Seite zu einem Felgenhornbereich 23 drückgewalzt werden kann. Der Felgenbettbereich 22 und der Felgenhornbereich 23 sind so ausgebildet, daß diese die Wandstärke der Felge des fertigen Fahrzeugrades aufweisen und nur einer geringfügigen Kalibrierung und Nachbearbeitung bedürfen. Der Drückwalzvorgang wird unter erhöhter Temperatur ausgeführt, welche am Werkstück beim Gießen und beim Transport zur Drückwalzmaschine erzeugt wurde.

Anschließend wird die Zwischenform 21 abgekühlt. Dies kann in derselben Aufspannung auf der Drückmaschine oder bevorzugterweise auf einem Transport zu einer zweiten Drückwalzmaschine ausgeführt werden, welche zur Kalibrierung der Werkstückkontur dient. Abhängig von einer Materialwahl kann vorausgehend noch eine Wärmebehandlung erfolgen, beispielsweise eine Warmaushärtung.

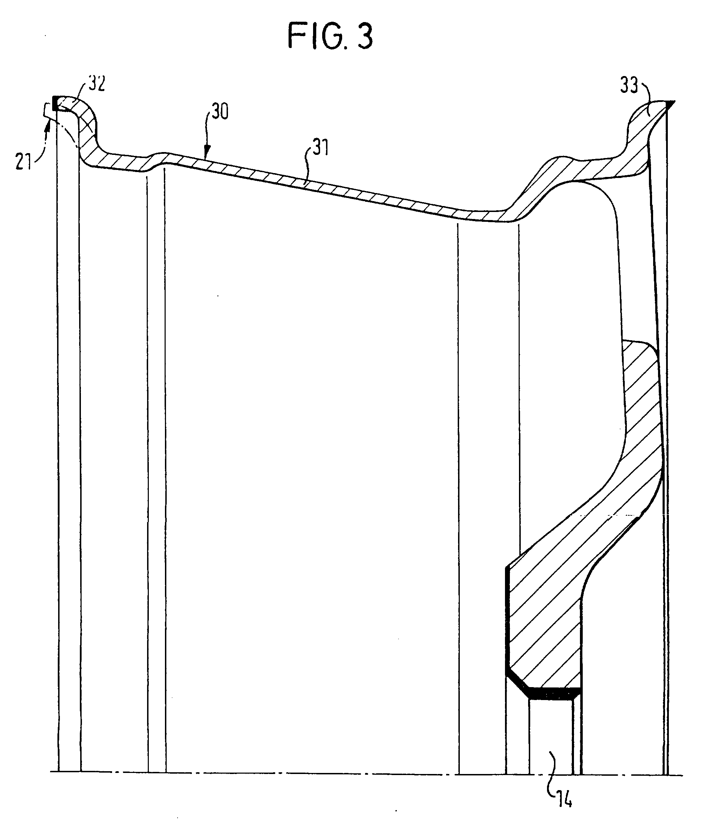

Nach einer Abkühlung der Zwischenform 21 wird diese auf einer Drückwalzmaschine kalibriert, wie aus Figur 3 zu entnehmen ist. Die gestrichelt dargestellte Zwischenform 21 wird in ein Drückfutter eingespannt. Eine Profilierrolle, deren Außenkontur dem gewünschten Profil eines Felgenbettes 31 eines fertigen Fahrzeugrades 30 entspricht, wird radial an die Zwischenform 21 zugestellt. Beim Kalibrieren werden auch die beiden Felgenhörner 32, 33 ausgeformt. Abschließend werden die geformten Kanten der beiden Felgenhörner 32, 33 sowie der Bereich der Mittenöffnung 14 spanabhebend endbearbeitet. Die als schwarze Flächen dargestellten Materialabnahmen sind dabei minimal gehalten, wie aus Figur 3 zu ersehen ist.

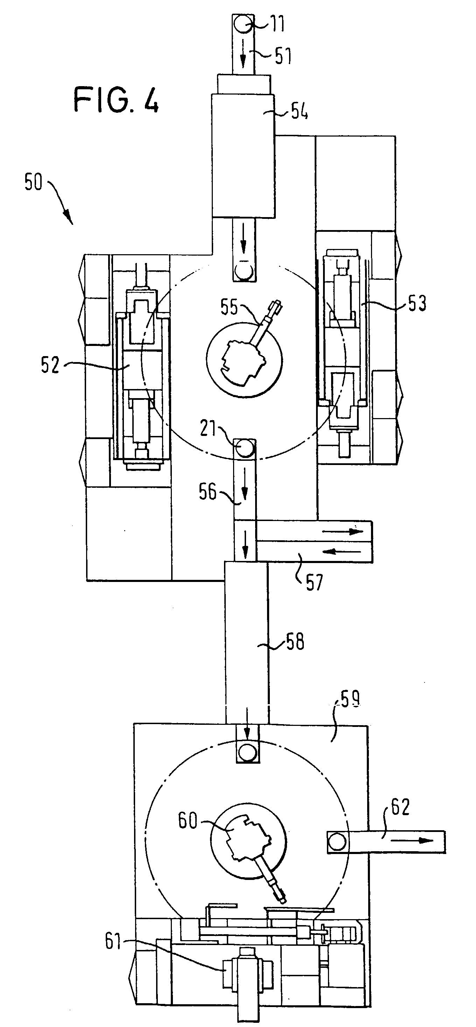

Eine Vorrichtung 50 zur Durchführung einer erfindungsgemäßen Verfahrensvariante ist in Figur 4 gezeigt. Eine aus einer Gußform entnommene Vorform 11, deren Temperatur geringer als die Schmelztemperatur des Werkstoffs, aber höher als die Umgebungstemperatur ist, wird mittels eines Förderbandes 51 zu einer Drückwalzstation transportiert, welche bei diesem Ausführungsbeispiel zwei Drückwalzmaschinen 52, 53 aufweist. Auf dem Weg zur Drückwalzstation durchläuft das Förderband 51 einen tunnelförmigen Wärmeofen 54, mit welchem die Vorform 11 von ihrer erhöhten Temperatur unmittelbar nach dem Gießen auf eine gewünschte Druckwalztemperatur erwärmt werden kann.

Die erwärmte Vorform 11 wird mittels einer Handhabungseinrichtung 55 von dem Förderband 51 entnommen und einer der beiden Drückwalzmaschinen 52, 53 zugeführt. Die Handhabungseinrichtung 55 dient auch zur Entnahme der geformten Zwischenformen 21 aus den Drückwalzmaschinen 52, 53 und zur Ablage auf ein weiteres Förderband 56. Neben einer Pufferstrecke 57 kann an dem Förderband 56 eine Wärmebehandlungsstation zum Lösungsglühen vorgesehen sein. Bei der dargestellten Ausführungsform führt das Förderband 56 durch eine tunnelförmige Abkühlvorrichtung zu einer Kalibrierstation 59. Mittels eines weiteren Handhabungsgerätes 60 wird die abgekühlte Zwischenform 21 von dem Förderband 56 zu einer Drückwalzmaschine 61 transportiert, in welcher die Kalibrierung ausgeführt wird. In der Kalibrierstation 59 kann auch die mechanische Endbearbeitung des Werkstückes stattfinden. Das endgeformte Werkstück wird mit Hilfe der Handhabungseinrichtung 60 zum Abtransport zu einem weiteren Förderband 62 transportiert.

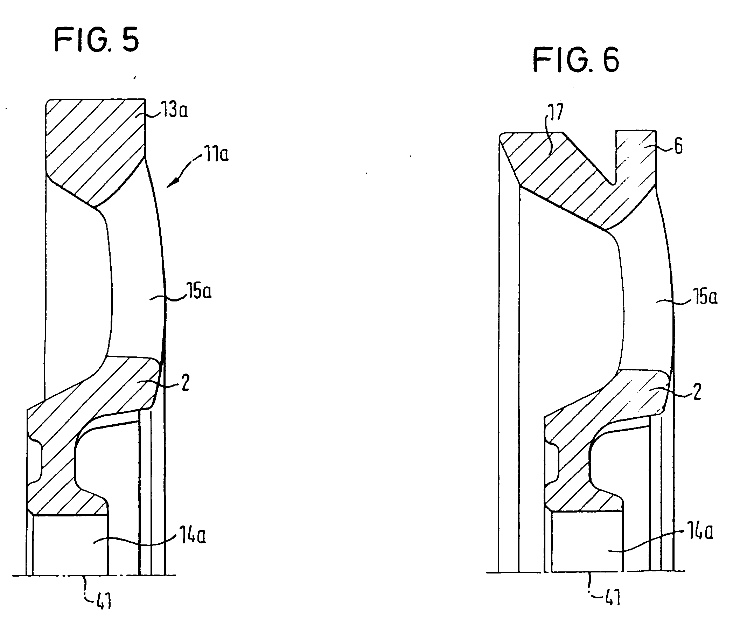

Fig. 5 zeigt eine weitere Vorform 11a, von welcher ausgehend das erfindungsgemäße Verfahren gemäß einer bevorzugten Variante durchgeführt wird. Die Vorform lla umfaßt einen fertig ausgebildeten Radkörper 2, der grundsätzlich radial ausgebildet ist, eine Mittenöffnung 14a und Durchbrüche 15a. Ein Umfangsbereich 13a ist etwa symmetrisch bezüglich einer Mittelebene senkrecht zur Mittenachse 41 ausgebildet.

In Fig. 6 ist eine Zwischenform zu sehen, welche aus der in Fig. 5 gezeigten Vorform lla durch Spalten des Umfangsbereiches 13a in zwei Schenkel, einen radialen Flansch 6 und einen Bereich 17 koaxial zur Mittenachse 41, hervorgeht.

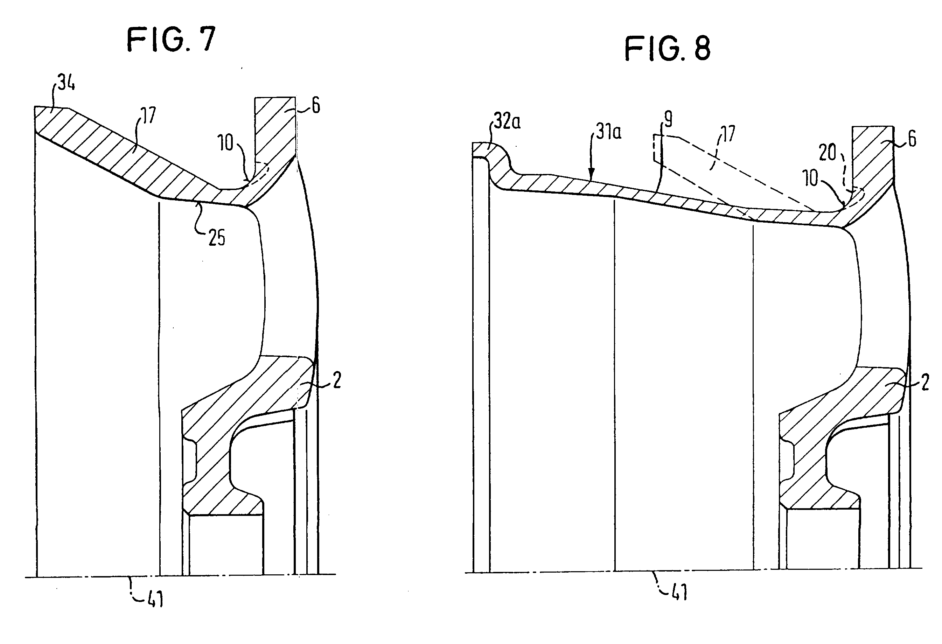

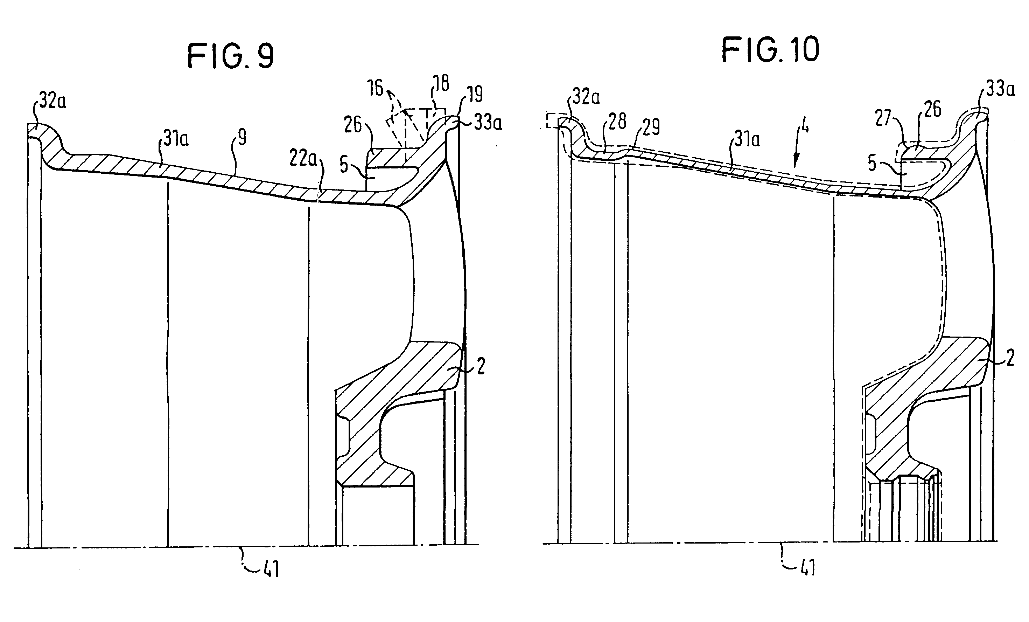

Fig. 7 zeigt eine Zwischenform, bei welcher der koaxiale Bereich zu einem freien Ende 34 hin nahezu konisch ausgeführt ist. Von dem koaxialen Bereich 17 und dem radialen Flansch 6 ist ein Eckbereich 10 eingeschlossen, dessen Ausbildung maßgeblich den herzustellenden Hinterschnitt 5 (siehe Fig. 9 und 10) bestimmt. Eine zur Mittenachse 41 gerichtete Innenwandung 25 des koaxialen Bereiches 17 weist eine Ausbildung auf, welche wie der Radkörper 2 dem fertig hergestellten Fahrzeugrad entspricht.

Die Wandstärken und -längen des radialen Flansches 6 und des koaxialen Bereiches 17 sind derart bemessen, daß die daraus resultierende Materialanhäufung zur gewünschten Ausbildung einer Felge 4 (siehe Fig. 10) geeignet ist.

In Fig. 8 ist mit unterbrochenen Linien noch der koaxiale Bereich 17 gezeigt. Mit durchgezogenen Linien ist ein Felgenbett 31a mit einem innenseitigen Felgenhorn 32a in einer vorgeformten Ausbildung dargestellt. Die Umformung des koaxialen Bereichs 17 in das vorgeformte Felgenbett 31a und das vorgeformte innenseitige Felgenhorn 32a erfolgt in einer Drückeinrichtung mit Hilfe radial anstellbarer Drückwalzen (nicht dargestellt) und insbesondere unter Wärmeeinwirkung. Das Felgenbett 31a mit innenseitigem Felgenhorn 32a kann auch als sogenannte lange Radseite 9 im Gegensatz zu einer sogenannten kurzen Radseite 19 (siehe Fig. 9 und 10) bezeichnet werden. In dem Eckbereich 10 ist strichpunktiert eine Auskehlung oder Ausnehmung 20 angedeutet, welche gegebenenfalls durch eine beispielsweise spanabhebende Bearbeitung oder Drücken des radialen Flansches 6 in diesem Bereich ausgebildet werden kann. Mit einer derartigen Auskehlung wird eine weitere Gewichtsreduzierung erreicht, welche besonders vorteilhaft ist.

Die lange Radseite 9 ist durch Drückwalzen gemäß Fig. 8 lediglich vorgeformt, während eine Endprofilierung oder ein Fertigdrehen in Fig. 10 dargestellt ist.

Fig. 9 zeigt die Ausbildung eines Hinterschnitts 5 zwischen dem Felgenbettbereich 22a und der Felgenschulter 26 in einer Drückmaschine, indem an dem radialen Flansch 6 wenigstens eine Spaltrolle (nicht dargestellt) angreift. Wie die strichpunktierten und strichlierten Linien des radialen Flansches 6 zeigen, wird dieser radial gespalten, wobei ein Innenschenkel 16 und Außenschenkel 18 gebildet werden. Beide Schenkel 16, 18 sind vornehmlich symmetrisch ausgebildet, so daß der Spaltvorgang besonders exakt durchgeführt werden kann. Mit durchgezogenen Linie sind ein außenseitiges Felgenhorn 33a sowie eine Felgenschulter 26 dargestellt, die durch Drückrollen aus dem Außenschenkel 18 bzw. dem Innenschenkel 16 umgeformt wurden. Das außenseitige Felgenhorn 33a ist nach außen abgebogen, während die Felgenschulter 26 im wesentlichen horizontal und achsparallel zur Mittenachse 41 verläuft. Im Bereich dieser Felgenschulter 26 liegt der Reifen mit einem Reifenwulst auf. Deutlich erkennbar ist aus Fig. 9 die Ausbildung des Hinterschnitts 5 und die damit verbundene Materialeinsparung und Gewichtsreduzierung.

Fig. 10 zeigt ein fertiges Fahrzeugrad. An der Felgenschulter 26 wurde ein Hump 27 angeformt. Die Konturen des Felgenbetts 31a, einer innenseitigen Felgenschulter 28, des Humps 27, eines weiteren Humps 29, des innenseitigen Felgenhorns 32a und der Felgenschulter 26 im Bereich des außenseitigen Felgenhorns 33a sowie des Hinterschnitts 5 sind genormt und werden mit einer spanabhebenden Bearbeitung erreicht.

## Patentansprüche

1. Verfahren zur Herstellung eines einteiligen Fahrzeugrades (30) mit einer Nabe und einer Felge, bei dem:
a) eine Vorform (11) gegossen wird,
b) die Vorform (11) unter Beibehaltung der Restwärme in einer Drückwalzmaschine (52, 53) eingespannt wird,
c) die eingespannte Vorform (11) durch Drücken und Drückwalzen zu einer Zwischenform (21) mit einem Felgenbettbereich (22) geformt wird, welcher bereits weitgehend die Wanddicke der Felge des fertigen Fahrzeugrades (30) aufweist,
d) die Zwischenform (21) abgekühlt wird und
e) die abgekühlte Zwischenform (21) kalibriert und zu dem fertigen Fahrzeugrad (30) endbearbeitet wird,
dadurch **gekennzeichnet**,
- daß eine hinterschneidungsfreie, im wesentlichen scheibenförmige Vorform (11) verwendet wird,
- daß die Vorform (11) unmittelbar nach dem Gießen mittels einer Fördereinrichtung zu der Drückwalzmaschine (52, 53) transportiert wird, wobei während des Transports mittels einer Temperaturregeleinrichtung eine gewünschte Drückwalztemperatur der Vorform (11) eingestellt wird, und
- daß dem Drücken und Drückwalzen ein Spalten des Umfangbereiches (13) der eingespannten Vorform (11) vorausgeht.

2. Verfahren nach Anspruch 1,
dadurch **gekennzeichnet,**
daß der Vorform (11) nach dem Gießen und vor der Umformung zu der Zwischenform (21) zusätzliche Wärme zugeführt wird.

3. Verfahren nach Anspruch 1 oder 2,
dadurch **gekennzeichnet,**
daß das Fahrzeugrad (30) aus einer nicht aushärtbaren Aluminiumlegierung, insbesondere Gk - Al Si 11 Mg, gefertigt wird.

4. Verfahren nach Anspruch 1 oder 2,
dadurch **gekennzeichnet,**
daß das Fahrzeugrad (30) aus einer warm aushärtbaren Aluminiumlegierung, insbesondere Gk - Al Si 7 Mg Wa, gefertigt wird.

5. Verfahren nach Anspruch 4,
dadurch **gekennzeichnet,**
daß die Zwischenform (21) einem Lösungsglühen und einer Abschreckkühlung unterzogen wird.

6. Verfahren nach einem der Ansprüche 1 bis 5,
dadurch **gekennzeichnet**,
daß das Kalibrieren der Felge (31) mittels einer Profilrolle auf einer Drückwalzmaschine durchgeführt wird und
daß die Felge lediglich noch in ihren Seitenbereichen an den Felgenhörnern (32, 33) mechanisch endbearbeitet wird.

7. Verfahren zur Herstellung eines einteiligen Fahrzeugrades (30) mit einer Nabe und einer Felge, insbesondere nach einem der Ansprüche 1 bis 6, bei dem
a) eine Vorform (11) in ihrem Umfangsbereich gespalten und ein erster Schenkel und ein zweiter Schenkel geformt werden,
b) durch Drückwalzen eine Zwischenform (21) gebildet wird, wobei der erste Schenkel zu einem Felgenbettbereich (22a) geformt wird, welcher bereits weitgehend die Wanddicke der Felge des fertigen Fahrzeugrades (30) aufweist, und der zweite Schenkel einen radialen Flansch (6) bildet,
c) der radiale Flansch (6) durch nochmaliges Spalten in einen zum Felgenbettbereich (22a) gerichteten Innenschenkel (16) und einen Außenschenkel (18) gespalten wird,
d) aus dem Außenschenkel (18) ein Felgenhorn (33a) geformt wird und
e) aus dem Innenschenkel (16) eine etwa axial gerichtete Felgenschulter (26) geformt und ein Hinterschnitt (5) zwischen dem Felgenbettbereich (22a) und der Felgenschulter (26) gebildet wird.

8. Verfahren nach Anspruch 7,
dadurch **gekennzeichnet,**
daß das Formen des Felgenhorns (33a) aus dem Außenschenkel (18) und der Felgenschulter (26) aus dem Innenschenkel (16) durch Drückwalzen erfolgt.

9. Verfahren nach einem der Ansprüche 7 oder 8,
dadurch **gekennzeichnet,**
daß an der Felgenschulter (26) ein Hump (27) angeformt wird.

10. Vorrichtung zur Herstellung eines einteiligen Fahrzeugrades, insbesondere nach einem der Ansprüche 1 bis 9, mit
- einer Gießstation zum Gießen von Vorformen (11),
- einer Drückwalzstation mit mindestens einer Drückwalzmaschine (52),
dadurch **gekennzeichnet,**
- daß die Gießstation zum Gießen von hinterschneidungsfreien, im wesentlichen scheibenförmigen Vorformen (11) ausgebildet ist,
- daß eine Fördereinrichtung vorgesehen ist, welche zwischen der Gießstation und der Drückwalzstation angeordnet und zum Transportieren der Vorformen (11) von der Gießstation zu der Drückwalzstation ausgebildet ist und
- daß eine entlang der Fördereinrichtung angeordnete Temperaturregeleinrichtung vorgesehen ist, insbesondere ein Wärmeofen, welcher zur Einstellung einer gewünschten Drückwalztemperatur der Vorformen (11) während des Transports ausgebildet ist.

## Claims

1. Method for producing a one-part vehicle wheel (30) with a hub and a rim, wherein:
a) a preform (11) is cast,
b) the preform (11), whilst maintaining the residual heat, is fixed in a flow-forming machine (52, 53),
c) the fixed preform (11) is shaped by spinning and flow-forming to an intermediate form (21) with a rim base area (22), which already substantially has the wall thickness of the rim of the finished vehicle wheel (30),
d) the intermediate form (21) is cooled and
e) the cooled intermediate form (21) is sized and end-worked to the finished vehicle wheel (30),
**characterized** in that,
- an undercut-free, substantially disk-shaped preform (11) is used,
- immediately after casting the preform (11) is conveyed by a conveyor means to the flow-forming machine (52, 53) and during conveying a desired flow-forming temperature of the preform (11) is set by means of a temperature regulating device and
- a splitting of the circumferential area (13) of the fixed preform (11) precedes spinning and flow-forming.

2. Method according to claim 1,
**characterized** in that,
after casting and before forming to the intermediate form (21), additional heat is supplied to the preform (11).

3. Method according to claim 1 or 2,
**characterized** in that,
the vehicle wheel (30) is manufactured from a non-age-hardenable aluminium alloy, particularly Gk-Al Si 11 Mg.

4. Method according to claim 1 or 2,
**characterized** in that,
the vehicle wheel (30) is manufactured from an artificially ageable aluminium alloy, particularly Gk-Al Si 7 Mg Wa.

5. Method according to claim 4,
**characterized** in that,
the intermediate form (21) undergoes a solution heat treatment and a quench cooling.

6. Method according to one of the claims 1 to 5,
**characterized** in that,
the sizing of the rim (31) is carried out by means of a section roller on a flow-forming machine and that the rim is only mechanically end-worked in its lateral areas at the rim beads (32, 33).

7. Method for producing a one-part vehicle wheel (30) with a hub and a rim, particularly according to one of the claims 1 to 6, wherein
a) the circumferential area of a preform (11) is split and a first leg and a second leg are formed,
b) by flow-forming an intermediate form (21) is formed, the first leg being shaped to a rim base area (22a), which already substantially has the wall thickness of the rim of the finished vehicle wheel (30) and the second leg forms a radial flange (6),
c) by further splitting, the radial flange (6) is split into an outer leg (18) and an inner leg (16) directed towards the rim base area (22a),
d) a rim bead (33a) is shaped from the outer leg (18) and
e) from the inner leg (16) is shaped a roughly axially directed rim shoulder (26) and an undercut (5) is formed between the rim base area (22a) and rim shoulder (26).

8. Method according to claim 7,
**characterized** in that,
the shaping of the rim bead (33a) from the outer leg (18) and the rim shoulder (26) from the inner leg (16) takes place by flow-forming.

9. Method according to one of the claims 7 or 8,
**characterized** in that,
a hump (27) is shaped on the rim shoulder (26).

10. Apparatus for producing a one-part vehicle wheel, particularly according to one of the claims 1 to 9, with
- a casting station for casting preforms (11),
- a flow forming station with at least one flow-forming machine (52),
**characterized** in that,
- the casting station is constructed for casting undercut-free, substantially disk-shaped preforms (11),
- a conveyor means is provided and is positioned between the casting station and the flow-forming station and is constructed for conveying the preforms (11) from the casting station to the flow-forming station, and
- a temperature regulating device, particularly a heating furnace is provided along the conveyor means and is constructed for setting a desired flow-forming temperature of the preforms (11) during conveying.

## Revendications

1. Procédé de fabrication d'une roue (30) de véhicule d'une seule pièce avec un moyeu et une jante, dans lequel :
a) une préforme (11) est moulée,
b) la préforme (11) est immobilisée, avec conservation de sa chaleur résiduelle, dans une machine de fluotournage (52, 53),
c) la préforme immobilisée (11) est transformée par repoussage au tour et fluotoumage en une forme intermédiaire (21) avec une zone (22) formant base de jante, laquelle présente déjà pour l'essentiel l'épaisseur de paroi de la jante de la roue (30) de véhicule terminée,
d) la forme intermédiaire (21) est refroidie et
e) la forme intermédiaire (21) refroidie est calibrée et reçoit un usinage final pour produire la roue (30) de véhicule terminée,
***caractérisé***
***en ce qu***'on utilise une préforme (11) sans contre-dépouille, pour l'essentiel de forme circulaire,
***en ce que*** la préforme (11) est transportée immédiatement après le moulage jusqu'à la machine de fluotournage (52, 53) au moyen d'un dispositif transporteur, une température de fluotournage de la préforme (11) étant maintenue pendant le transport au moyen d'un dispositif de régulation thermique, et
***en ce que*** le repoussage au tour et le fluotournage sont précédés d'un refendage de la zone circonférentielle (13) de la préforme (11) immobilisée.

2. Procédé selon la Revendication 1, ***caractérisé en ce que*** de la chaleur supplémentaire est appliquée à la préforme (11) après le moulage et avant la transformation en forme intermédiaire (21).

3. Procédé selon la Revendication 1 ou 2, ***caractérisé en ce que*** la roue (30) de véhicule est fabriquée dans un alliage d'aluminium inapte à prendre la trempe, en particulier Gk - Al Si 11 Mg.

4. Procédé selon la Revendication 1 ou 2, ***caractérisé en ce que*** la roue (30) de véhicule est fabriquée dans un alliage d'aluminium apte à prendre la trempe, en particulier Gk - Al Si 7 Mg Wa.

5. Procédé selon la Revendication 4, ***caractérisé en ce que*** la forme intermédiaire (21) est soumise à un traitement thermique de mise en solution et à un refroidissement par trempe.

6. Procédé selon l'une quelconque des Revendications 1 à 5, ***caractérisé en ce que*** le calibrage de la jante (31) s'effectue au moyen d'un rouleau profilé sur une machine de fluotoumage, et *en ce que* la jante ne reçoit plus un usinage mécanique final que dans ses parties latérales, au niveau des bourrelets (32, 33) de la jante.

7. Procédé de fabrication d'une roue (30) de véhicule d'une seule pièce avec un moyeu et une jante, en particulier selon l'une quelconque des Revendications 1 à 6, dans lequel :
a) une préforme (11) est fendue dans sa zone circonférentielle et une première branche et une deuxième branche sont formées,
b) par fluotournage, une forme intermédiaire (21) est formée, la première branche étant transformée en zone (22a) formant base de jante, laquelle présente déjà pour l'essentiel l'épaisseur de paroi de la jante de la roue (30) de véhicule terminée, et la deuxième branche formant une bride radiale (6),
c) la bride radiale (6) est fendue par un nouveau fendage en une branche intérieure (16) tournée vers la zone (22a) formant base de jante et en une branche extérieure (18),
d) un bourrelet (33a) de jante est formé à partir de la branche extérieure (18), et
e) une épaule (26) de jante d'orientation axiale est formée à partir de la branche intérieure (16) et une contre-dépouille (5) est formée entre la zone (22a) formant base de jante et l'épaule (26) de la jante.

8. Procédé selon la Revendication 7, ***caractérisé en ce que*** le formage du bourrelet (33a) de jante à partir de la branche extérieure (18) et de l'épaule (26) de la jante à partir de la branche intérieure (16) s'effectue par fluotournage.

9. Procédé selon l'une quelconque des Revendications 7 ou 8, ***caractérisé en ce qu***'un "hump" (bosse) (27) est formé sur l'épaule (26) de la jante.

10. Dispositif pour la fabrication d'une roue de véhicule d'une seule pièce, en particulier selon l'une quelconque des Revendications 1 à 9, avec
un poste de moulage pour mouler la préforme (11),
un poste de fluotournage avec au moins une machine de fluotoumage (52),
***caractérisé***
***en ce que*** le poste de moulage est conformé pour mouler des préformes (11) dépourvues de contre-dépouille, pour l'essentiel de forme circulaire,
***en ce qu***'il est prévu un dispositif transporteur qui est placé entre le poste de moulage et le poste de fluotoumage et qui est conformé pour transporter les préformes (11) du poste de moulage au poste de fluotournage, et
***en ce qu***'il est prévu un dispositif de régulation thermique placé le long du dispositif transporteur, en particulier un four, qui est conformé pour établir une température de fluotournage souhaitée pour les préformes (11) pendant le transport.
